# EUROPÄISCHE PATENTANMELDUNG

(11) **EP 4 654 049 A1**
(43) Veröffentlichungstag der Anmeldung: **26.11.2025**
(21) Anmeldenummer: 24177631.9
(22) Anmeldetag: 23.05.2024
(51) Int. Cl.: G06F 21/10, G06F 21/51, G06F 21/53, G06F 21/57, G06F 9/455

(54) **COMPUTER-IMPLEMENTIERTES VERFAHREN UND SYSTEM ZUM BEREITSTELLEN EINES REGELWERKS ZUR AUSFÜHRUNGS- UND/ODER RESSOURCENZUGRIFFSBESCHRÄNKUNG FÜR ZUMINDEST EINE AUS EINEM CONTAINER-IMAGE GEBILDETEN CONTAINER-INSTANZ**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Die Erfindung beansprucht ein computerimplementiertes Verfahren Computer-implementiertes Verfahren zum Bereitstellen eines Regelwerks zur Ausführungs- und/oder Ressourcenzugriffsbeschränkung für zumindest eine aus einem Container-Image (IM) gebildeten Container-Instanz (IZ), aufweisend folgende Schritte:
- vor dem Laden des Container-Images erstellen des Regelwerks (REP) und instanziieren einer containerimagespezifischen Version des Regelwerks und ablegen der containerimagespezifischen Version in einer Regeldatenbank (DB),
- beim Laden des Container-Images durch eine Container-Laufzeitumgebung (L) laden der containerimagespezifischen Version des Regelwerks in einen lokalen Speicher (Ch) einer Ausführungsumgebung zur Ausführung der Container-Instanz, die aus dem Container-Image durch die Container-Laufzeitumgebung gebildet wird,
- vor dem Ausführen der Container-Instanz ermitteln von durch die Container-Laufzeitzeitumgebung der auszuführenden Container-Instanz zugewiesenen Privilegien und zugewiesenen Ressourcen der Ausführungsumgebung (A) mittels eines auf der Ausführungsumgebung betriebenen Überwachungsdienstes (D),
- Überwachen von zur Ausführung der Container-Instanz notwendigen Prozessen während der Ausführung der Container-Instanz mittels der ermittelten Privilegien und Ressourcen sowie anhand der geladenen containerimagespezifischen Version des Regelwerks,
- und bei negativem Ergebnis des Überwachens Einleiten einer der Ausführung der genannten Prozesse entgegenwirkenden Maßnahme.

## Beschreibung

Die Erfindung betrifft ein computer-implementiertes Verfahren und System zum Bereitstellen eines Regelwerks zur Ausführungs- und/oder Ressourcenzugriffsbeschränkung für zumindest eine aus einem Container-Image gebildeten Container-Instanz
und ein zugehöriges Computerprogrammprodukt.

Vor allem industrielle Systeme (Steuergeräte, Industrie PCs, loT- und Edge-Geräte, Cloud-Server) werden oft über einen langen Zeitraum im Feld verwendet. Sie sind sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, z.B. durch die Unterstützung von nachladbaren Applikationen bzw. Anwendungen bzw. Apps. Geeignet dafür sind Software Container, im Weiteren kurz Container genannt. Container stellen somit eine Art der Virtualisierung einer Ausführungsumgebung auf einem Gastrechner, auch Hostsystem genannt, dar und kapseln eine in einem Container betriebene Anwendung vom darunterliegenden Hostsystem ab. Anwendungen, auch Applikationen genannt, werden mittlerweile in vielen Bereichen wie beispielsweise in der Industrieautomation und in der Prozesssteuerung, aber auch für Anwendungen in Transportsystemen oder Fahrzeugen mittels Container implementiert.

Um einen Container auf dem Hostsystem starten zu können, wird ein Containerabbild (auch Containerimage) benötigt, welches neben einem Anwendungsprogramm, auch Applikationssoftware genannt, die für das Anwendungsprogramm erforderlichen Binärdateien und Bibliotheken enthält. Das Containerimage selbst kann aus mehreren aufeinander aufbauenden Schichten (Layern) bestehen, die geschützt (kryptographisch, speichergeschützt, etc.) werden können. Ein Containerimage ist normalerweise portabel, kann in einem Repository (Ablage), auch Container-Registry bezeichnet, gespeichert und mit anderen Nutzern geteilt werden.

Auf dem Hostsystem wird aus dem Containerabbild eine Containerinstanz, vereinfacht ausgedrückt ein Container, erstellt und auf einer (Container-)Laufzeitumgebung, wie beispielsweise Docker, Podman, Containerd, ausgeführt. Bei Bedarf, beispielsweise bei einem verstärkten Aufruf der Anwendung durch Nutzer, können aus dem gleichen Containerabbild weitere Containerinstanzen auf dem gleichen oder einem anderen Hostsystem, das auch als virtualisierte Hardware-Ressource ausgebildet sein kann, erzeugt und ausgeführt werden. Aus den Layern eines Abbildes und einer weiteren flüchtigen Schicht wird das Wurzel(root)-Dateisystem einer Containerinstanz gebildet. Dabei dürfen mehrere Containerinstanzen ("als Gäste"), isoliert voneinander den Betriebssystemkern (auch Kernel genannt) eines Hostsystems nutzen. Zusätzlich zum Betriebssystemkern können auch die durch den Betriebssystemkern verwalteten Ressourcen (z.B. angeschlossene Hardware-Schnittstellen oder sonstige Ressourcen) mitbenutzt werden. Im Weiteren werden die Bezeichnungen Containerinstanz und Container synonym verwendet.

Beim Start der Containerinstanz werden den in der Containerinstanz gestarteten Prozessen Ausführungsberechtigungen, auch Privilegien genannt, wie z.B. Fähigkeiten (Capabilities) oder sogenannte Seccomp-Profile (https://docs.docker.com/engine/security/seccomp/), da die einen Satz erlaubter Systemaufrufe definieren, zugeordnet. Auch werden eine Einbindung von Geräten- oder anderen Dateisystem-Ressourcen des darunterliegenden Geräts bzw. Systems vereinbart. Um Angriffe durch die Anwendung auf das Hostsystem zu vermeiden, können diese Ausführungsberechtigungen bzw. Ressourcenzugriffe be-/eingeschränkt (= Restriktionen) werden, sodass dem Container lediglich die für den Betrieb der Anwendung erforderlichen Rechte zugewiesen werden. Üblicherweise besteht eine containerisierte Anwendung nicht aus einer einzigen isolierten Containerinstanz, sondern wird aufgrund einer Microservice-basierten Architektur im Verbund mit anderen Containerinstanzen als Gesamtanwendung bereitgestellt. Ein Zusammenspiel mehrerer Containerinstanzen bzw. ein Zusammenspiel deren virtueller Infrastruktur und insbesondere deren Laufzeit- und Prozessberechtigungen, wird unter anderem in einer Bereitstellungs- bzw. Instanziierungsinformation, auch Deployment-Konfiguration genannt, definiert. Im orchestrierten Bereich kann hierfür beispielsweise ein Kubernetes Manifest oder Helm-Chart verwendet werden, im nichtorchestrierten Bereich kann hierfür beispielsweise ein von Docker spezifiziertes docker-compose Format verwendet werden.

Zusammengefasst wird bei der Instanziierung eines Containerimages dieses nicht nur ausgeführt, sondern ggf. auch durch Zuweisung von Host-Ressourcen oder Privilegien für die Laufzeitumgebung umkonfiguriert, sodass z.B. Applikationen, die innerhalb eines Containerimages geliefert werden, z.B. ein verändertes Angriffspotential erhalten oder ggf. nicht konform zur Lizenz des Image-Entwicklers betrieben werden können.

Gleichzeitig kann eine Container-Instanz, welche auf einer Laufzeitumgebung ausgeführt wird, mit Hilfe entsprechender Berechtigungen dynamisch zur Laufzeit ausführbare Programme nachladen und somit die ursprünglich vom Entwickler im (Container-)Image bereitgestellte Applikationsversion überschreiben oder auch Ausführungsberechtigungen des Programmes zur Laufzeit modifizieren, sodass ein Angreifer veränderten Programmcode oder den gleichen Programmcode mit veränderten Berechtigungen ausführen kann und somit z.B. Zugriff auf sensible Daten erhalten kann.

Auch unter der Annahme, dass auf der Ausführungsumgebung ausschließlich vertrauenswürdige Images ausgeführt werden, kann ein Entwickler, welcher ein Image bereitstellt, die oben beschriebenen Szenarien nicht verhindern. Grund hierfür ist, dass zum einen die bekannten Signaturverfahren für Container-Instanzen nur das Image in der Registry bzgl. Integrität und Authentizität schützen und zum anderen die Instanziierungsinformation nicht Bestandteil des Images ist, sondern davon unabhängig erstellt wird. Somit ist der Ersteller einer Instanziierungsinformation unabhängig vom Ersteller des Images, wodurch die Ausführungsberechtigungen einzelner Programme, die innerhalb des Images zur Verfügung gestellt werden, verändert werden können.

Bekannt sind Application Whitelisting Lösungen wie z.B. fapolicyd (siehe https://github.com/linux-application-whitelisting/fapolicyd). Hierbei handelt es sich um eine Application Whitelisting-Lösung für Linux-Systeme, welche keinen Fokus auf Container hat, sondern im Allgemeinen auf Linux-Systemen anwendbar ist. Fapolicy nutzt hierbei das fanotify-Modul des Kernels (siehe https://de.wikipedia.org/wiki/Fanotify) um vor der Ausführung eigentlichen Programmes entsprechende Überprüfungen gegenüber einem lokal abgelegten Regelwerk durchzuführen. Fapolicyd unterstützt hierbei auch die direkte Integration lokaler, auf dem System befindlicher Linux-Paketmanager, welche zur Ermittlung der Dateiprüfsumme und der lokal abgelegten Berechtigungen verwendet werden. Weiterhin können auch übergebene Programmoptionen für ein zu startendes Programm ausgewertet werden oder benutzerspezifische Berechtigungen erteilt werden. Allerdings können nicht bestimmte, container-spezifische Optionen - wie z.B. die Zuweisung eines bestimmten Mounts zu einer Instanz - ausgewertet werden.

Für Windows-Systeme existieren Lösungen wie AppLocker (siehe https://learn.microsoft.com/de-de/windows/security/application-security/applicationcontrol/windows-defender-application-control/applocker/applocker-overview) oder Windows Defender Application Control (https://learn.microsoft.com/de-de/windows/security/applicationsecurity/application-control/windows-defender-application-control/wdac). Wie fapolicyd verwenden ähnliche Mechanismen und beide Lösungen sind nicht Container-basiert.

Der Erfindung liegt daher die Aufgabe zugrunde, ein Verfahren und ein System derart auszugestalten, dass
eine gegenüber dem Stand der Technik verbesserter Schutz vor unbefugtem Zugriff auf eine oder mehrere gemeinsame Ressourcen bzw. veränderten Ausführungsberechtigung gewährleistet wird.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht ein computerimplementiertes Verfahren Computer-implementiertes Verfahren zum Bereitstellen eines Regelwerks zur Ausführungs- und/oder Ressourcenzugriffsbeschränkung für zumindest eine aus einem Container-Image gebildeten Container-Instanz, aufweisend folgende Schritte:
- vor dem Laden des Container-Images erstellen bzw. erzeugen bzw. definieren des Regelwerks und instanziieren einer containerimagespezifischen Version des Regelwerks und ablegen der containerimagespezifischen Version in einer Regeldatenbank,
- beim Laden des Container-Images durch eine Container-Laufzeitumgebung laden der containerimagespezifischen Version des Regelwerks in einen lokalen Speicher einer Ausführungsumgebung zur Ausführung der Container-Instanz, die aus dem Container-Image durch die Container-Laufzeitumgebung gebildet wird,
- vor dem Ausführen der Container-Instanz ermitteln von durch die Container-Laufzeitzeitumgebung der auszuführenden Container-Instanz zugewiesenen Privilegien und zugewiesenen Ressourcen der Ausführungsumgebung mittels eines auf der Ausführungsumgebung betriebenen Überwachungsdienstes,
- Überwachen von zur Ausführung der Container-Instanz notwendigen Prozessen während der Ausführung der Container-Instanz mittels der ermittelten Privilegien und Ressourcen sowie anhand der geladenen containerimagespezifischen Version des Regelwerks,
- und bei negativem Ergebnis des Überwachens Einleiten einer der Ausführung der genannten Prozesse entgegenwirkenden Maßnahme.

Wenn beim Überwachen zumindest ein Prozess als unbefugt bzw. "kritisch" erkannt wird, dann Einleiten einer den Zugriff auf die Ressourcen entgegenwirkenden bzw. unterbindenen Behandlung/Maßnahme mittels einer Alarmnachricht oder durch Stoppen des "unbefugten" bzw. "kritischen Prozesses oder Stoppen der Ausführung der ganzen Containerinstanz. Stoppen kann hierbei Unterbrechen oder Beenden bedeuten.

Bei einem positiven Ergebnis laufen die Prozesse weiter.

Nach Einleiten einer solchen Maßnahme und/oder Beenden der Ausführung der Container-Instanz kann die containerimagespezifische Version des Regelwerks aus dem lokalen Speicher gelöscht werden.

Unter Ressourcen kann in diesem Kontext einerseits ein Namensraum verstanden werden, der durch mehrere Containerinstanzen geteilt werden kann. Ressourcen können aber auch Dateisystemobjekte, welche in der Regel Dateien oder Verzeichnisse/Ordner sind, und Gerätedateien sein. Wenn solche Objekte bzw. Dateien virtuell ausgestaltet sind, dann gelten Vater-Kind-Beziehungen ähnlich wie bei den Namensräumen. Wenn diese Objekte bzw. Dateien physisch ausgestaltet sind, liegen sie auf dem Hostsystem. Ggf. mehrere Containerinstanzen greifen auf sie über die Container-Laufzeitumgebung zu.

Containerinstanzen können zum Start komplett in eigenen Namenräumen des Betriebssystems (z.B. Linux-Namespaces) betrieben werden oder auch gemeinsam in geteilten Namenräumen des Betriebssystems laufen. Hierbei ist es nicht erforderlich, dass sämtliche Containerinstanzen sich alle Namensräume teilen, sondern auch einzelne Typen von Namensräumen geteilt werden; z.B. lediglich der Netzwerk-Namenraum. Letzteres kommt zur bei sogenannten Sidecar-Containern zum Einsatz, die beispielsweise einen transparenten Proxy (Stellvertreter) für einen Workload-Container realisieren. Bei entsprechend privilegierten Containern ist es zudem möglich, dass diese im Host-Namenraum betrieben werden und somit im Vater-Namenraum anderer Containerinstanzen betrieben werden.

Ein Berechtigungskriterium im Regelwerk kann derart ausgestaltet sein, dass Prozesse als erlaubt bzw. als unbefugt/verboten mit einem entsprechenden Kennzeichen/Label gekennzeichnet sind.

Ein oder mehrere Berechtigungskriterien des Regelwerks können so ausgestaltet sein, dass sie gemeinsam mit der Deploymentkonfiguration oder mit dem Containerabbild durch eine Signatur integritätsgesichert werden. Hierdurch wird es gegen unbereichtigte Modifikation geschützt. Die Signatur kann somit beim Deployment durch die Laufzeitumgebung validiert werden.

Aus den Berechtigungskriterien kann abgeleitet werden, ob eine Alarmnachricht oder ein Stoppen der Ausführung der Containerinstanz eingeleitet werden soll.

Der Überwachungsdienst kann als eine Überwachungseinheit in Form eines Clients für die Containerinstanzen ausgestaltet sein; diese kann auf dem Gerät/Hostsystem integriert (z.B. Plugin/Agent), aber auch außerhalb des Hostsystem auf einem Remotesystem betrieben werden. Auf einer Ausführungsumgebung des Hostsystems kann neben der Container-Laufzeitumgebung zusätzlich der Überwachungsdienst als ein Enforcement-Daemon betrieben werden. In der Linux Welt ist ein Daemon ein Hintergrundprozess, der typischerweise Aufgaben ausführt, ohne dass eine Benutzerinteraktion erforderlich ist. Diese Aufgaben sind häufig kritische Dienste wie protokollieren, routen oder andere Web-Dienste.

Die Instanziierung der containerspezifischen Version des Regelwerks kann innerhalb eines Container-Registers (Container-Registry) durchgeführt werden. Die containerimagespezifische Version des Regelwerks kann bestimmte Eigenschaften von für das Container-Image erforderliche Signaturen und/oder Namespaces, das Einhängen von Laufwerken- und/oder Dateien der Ausführungsumgebung und/oder Prozess-Privilegien umfassen. Bei der Instanziierung der containerspezifischen Version des Regelwerks kann für Binärdateien des Container-image jeweils Prüfsummen erstellt werden.

Die erfindungsgemäße Lösung bietet den Vorteil, dass der Ersteller eines Container-Images für die innerhalb des Images gelieferten Programme ein Application Whitelisting Regelwerk definieren kann und diese dann auf der Ausführungsumgebung durchgesetzt werden. Idealerweise unterstützt eine solche Lösung auch container-spezifische Aspekte. Beim Upload des Container-Image in eine Container Registry wird das Regelwerk als containerimagespezifischen Version des Regelwerks instanziiert und durch die Registry in einer Regeldatenbank z.B. in Form einer Application Whitelisting Datenbank abgelegt. Für das Überwachen der Ausführung der Container-Instanz kann die instanziierte containerimagespezifische Version des Regelwerks in einem von der Container-Laufzeitumgebung zugreifbaren Repository bereitgestellt werden. Das Repository kann ein Application Whitelisting Regelwerk umfassen.

Das Verfahren ist vorzugsweise rechner-/computergestützt bzw. computerimplementiert ausgebildet bzw. wird vorzugsweise rechner-/computergestützt bzw. computerimplementiert ausgeführt. Die Schritte des Verfahrens können beliebig oft wiederholt werden und Wiederholungen können ggf. anhand definierter Bedingungen, sei es ereignisorientiert oder zeitlich begrenzt, beendet werden.

Ein weiterer Aspekt der Erfindung ist ein System geeignet System zum Bereitstellen eines Regelwerks zur Ausführungs- und/oder Ressourcenzugriffsbeschränkung für zumindest eine aus einem Container-Image gebildeten Container-Instanz, aufweisend:
- eine Schnittstelle zu einem Container-Registers, das vor dem Laden des Container-Images das Regelwerks erstellt, eine containerimagespezifische Version des Regelwerks instanziiert und diese in einer Regeldatenbank ablegt,
- eine Container-Laufzeitumgebung, welche dazu ausgelegt ist, beim Laden des Container-Images die containerimagespezifische Version des Regelwerks in einen lokalen Speicher des Systems zur Ausführung der Container-Instanz zu laden, welche aus dem Container-Image durch die Container-Laufzeitumgebung gebildet wird,
- eine Überwachungseinheit zum Betreiben eines Überwachungsdienstes auf einer Ausführungsumgebung des Systems, welcher dazu ausgebildet ist, von durch die Container-Laufzeitzeitumgebung der auszuführenden Container-Instanz zugewiesenen Privilegien und zugewiesenen Ressourcen der Ausführungsumgebung vor dem Ausführen der Container-Instanz zu ermitteln und
- zur Ausführung der Container-Instanz notwendige Prozesse während der Ausführung der Container-Instanz mittels der ermittelten Privilegien und Ressourcen sowie anhand der geladenen containerimagespezifischen Version des Regelwerks zu überwachen und
- bei negativem Ergebnis des Überwachens eine der Ausführung der genannten Prozesse entgegenwirkenden Maßnahme einzuleiten.

Des Weiteren kann ein Computerprogrammprodukt eingesetzt werden, umfassend ein nichtflüchtiges Speichermedium, auf dem ein ladbarer und ausführbarer Programmcode gespeichert ist, welches das Verfahren nach einem der oben genannten Ausführungsformen in einer Prozessoreinheit insbesondere einer oder verteilt in mehreren Vorrichtungen/Systeme nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Das System bzw. Vorrichtungen, Einheiten bzw. Geräte und Computerprogramm(-produkte), welches einen ladbaren und ausführbaren Programmcode oder verteilt ladbare und ausführbare Programmcodemodule umfassen kann, können entsprechend der Weiterbildungen/Ausführungsformen des vorgenannten Verfahrens und deren Weiterbildungen/Ausführungsformen und umgekehrt ausgebildet sein.

Eine Ausführungsform der Erfindung sieht vor, dass in das System ein oder mehrere Einheiten bzw. Komponenten bzw. Einrichtungen integriert sein können und diese als eine Software-, Firmware- bzw. Hardware-Komponente ausgebildet sein können. Das System umfasst in der Regel wenigstens einen Prozessor, der auf Betriebssystemebene als Kernel Operationen ausführen kann.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Die Figur 1 eine beispielhafte Anordnung, bei der das erfindungsgemäße Verfahren angewandt werden kann, und
die Figur 2 eine beispielhafte Ablaufbeschreibung beim Start einer neuen Container-Instanz.

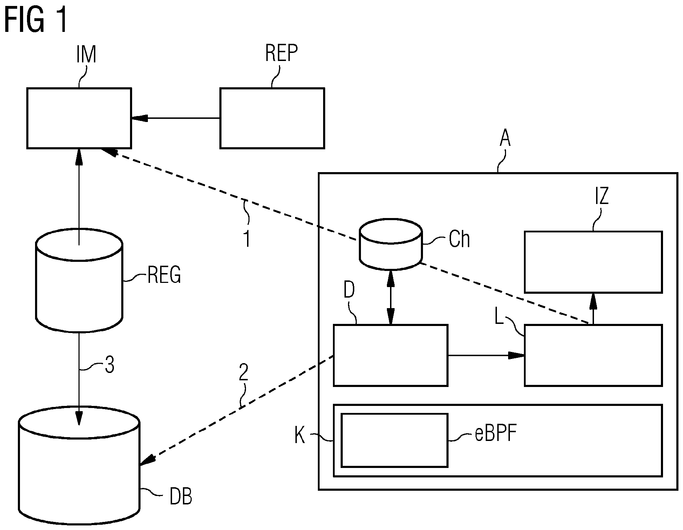

Die Figur 1 zeigt beispielsweise ein Hostsystem mit einer Ausführungumgebung A, die eine Überwachungseinheit, im Beispiel ein Enforcement-Daemon D aufweist. Auf der Betriebssystemebene tauscht die Ausführungsumgebung A mit einem Kernel K Befehle bzw. Instruktionen aus. Der Kernel steuert letztendlich Prozesse. Mit einem extended Berkeley Packet Filter eBPF (abgekürzt eBPF, siehe auch https://ebpf.io ) bietet der Kernel zusätzlich eine Schnittstelle an, mit dem Prozesse unterbrochen oder generell der Prozessablauf überwacht, verzögert oder beeinflusst werden kann. Hierdurch besteht die Möglichkeit, dass angepasste eBPF-Programme den Start eines Programmes bis zu einer erfolgten Integritätsüberprüfung verzögern können oder bei einer Regelwerksverletzung den Start des Programmes verzögern können.

Vor dem Start einer Containerinstanz IZ für eine Anwendung, die in der Containerinstanz betreibbar ist, wird bei der Entwicklung des Container-Image, aus dem die zu startende Containerinstanz IZ mit Hilfe einer Container-Laufzeitumgebung L erzeugt wird, zusätzlich eine Deploymentkonfiguration bzw. Bereitstellungsinformaion festgelegt. Das Festlegen einer Deploymentkonfiguration kann auch abhängig vom App-Typ automatisch ggf. mit StandardWerten (Default-Werten) generiert werden. Es wird zusätzlich mindestens ein Berechtigungskriterium ggf. bei der Entwicklung oder automatisch (s.o.) festgelegt und ggf. mittels eines App-Stores oder einer anderen Downloadplattform bereitgestellt.

Ein Entwickler für ein von ihm erzeugtes Container-Image erstellt bzw. definiert ein Regelwerk, welches in einen Repository REP bereitgestellt werden kann, und lädt dieses mit der Deployment-Konfiguration in eine Container-Registry REG. Damit wird eine containerimagespezifische Version des Regelwerks instanziiert und in Schritt 3 durch Container-Registry in einer Regeldatenbank, im Beispiel Application Whitelisting Datenbank DB, abgelegt. Die Datenbank kann auch durch Verwendung einer CI/CD-Pipeline erzeugt werden kann. Eine Pipeline ist ein Prozess, der die Softwareentwicklung durch Erstellen, Testen und Bereitstellen von Code vorantreibt, auch bekannt als CI/CD. Bei containerisierten Umgebungen enthält diese Pipeline auch das Paketieren des Progammcodes in ein Container-Image zum Deployment z.B. in einer Cloud.

Das Regelwerk wird anschließend von einer entsprechenden Container-Laufzeitumgebung L in Schritt 1 durchgesetzt, indem auf einer entsprechenden Ausführungsumgebung A neben der Container-Laufzeitumgebung L zusätzlich ein Enforcement-Daemon D betrieben wird, welcher beim Laden eines Container-Images das für das Image erzeugte, instanziierte Application Whitelisting Regelwerk in Schritt 2 von einer Regeldatenbank, im Beispiel Application Whitelisting Datenbank DB, in einen lokalen, auf der Ausführungsumgebung betriebenen Cache-Speicher Ch lädt. Der Enforcement-Daemon setzt hiermit für die Instanz ermittelte Überwachungen bzw. -prüfungen durchführt und somit das Whitelisting auf der Laufzeitumgebung durch, indem er vor dem vor dem Ausführen der Container-Instanz von durch die Container-Laufzeitzeitumgebung der auszuführenden Container-Instanz zugewiesenen Privilegien und zugewiesenen Ressourcen der Ausführungsumgebung ermittelt und die notwendigen Prozessen während der Ausführung der Container-Instanz mittels der ermittelten Privilegien und Ressourcen sowie anhand der geladenen containerimagespezifischen Version des Regelwerks überwacht. Im Falle eines negativen Überwachungsergebnisses wird eine der Ausführung der genannten Prozesse entgegenwirkenden Maßnahme, z.B. Alarm oder Beenden der Container-Instanz, eingeleitet.

Der Entwickler erstellt hierfür zunächst ein abstraktes Regelwerk, in welchem er direkt die auszuführenden Programm-Dateien des Images referenzieren kann. In dieser Phase ist es nicht erforderlich, dass entsprechende Prüfsummen für die jeweiligen zu schützenden Programme generiert werden, da die einzelnen Schichten eines Images während des Erstellungs-Prozesses gemäß des OCI-Image Formates über entsprechende Prüfsummen geschützt werden. Übliche Container-Signaturverfahren wie z.B. Notary v2 oder Cosign verwenden die gleiche Vorgehensweise und signieren nicht das Image als Ganzes, sondern die einzelnen Schichten und die Abfolge der Zusammensetzung für das jeweilige Container-Image-Tag.

In dem vom Entwickler erzeugten abstrakten Regelwerk kann zusätzlich spezifiziert werden, dass nur bestimmte Benutzer oder Gruppen ein Programm ausführen dürfen. Hierbei kann auch der Benutzer- oder Gruppenname definiert werden, welcher aufgrund der lokalen, Container-spezifischen /etc/passwd-Einträge erst bei der Instanziierung des abstrakten Regelwerkes in der Registry auf eine User-ID oder Gruppen-ID übersetzt werden kann. Weiterhin können Ausführungsparameter der jeweiligen Programme (auch mit Hilfe regulärer Ausdrücke) spezifiziert werden. Gleiches gilt auch für ausführbare Programme. Es können vom Whitelisting auch einzelne Verzeichnisbereiche im Container-Root-Dateisystem ausgenommen werden, sodass nur bestimmte Applikationsprogramme bzgl. ihrer Ausführung eingeschränkt werden.

Zusätzlich können auch containerspezifisiche Aspekte in das abstrakte Regelwerk einfügbar sein. Hierbei können z.B. Prozess-Privilegien wie Capabiltities (Fähigkeiten), das Überschreiben bestimmter Dateisystembereiche (z.B. /etc oder Teile davon innerhalb der Instanz) oder das Mounten (Einbinden) bestimmter Host-Verzeichnisse eingeschränkt werden. Gleiches gilt für die Zuweisung bestimmter Namensräume. Z.B. kann spezifiziert werden, dass das gleiche Programm von einem Benutzer anders ausgeführt werden muss, wenn es im Netzwerk-Namensraum des Hostsystems ausgeführt wird und nicht in einem eigenständigen Container-Namespace. Das erfindungsgemäße Verfahren hat den Vorteil, dass für unterschiedliche Instanziierungen unterschiedliche Ausführungsbedingungen definiert werden können.

Ist das Regelwerk erzeugt und das Image vom Image-Ersteller gebaut, wird beides von diesem in die Registry hochgeladen. Das abstrakte Regelwerk kann hierbei z.B. mit Hilfe entsprechender Metadaten oder als eigenständiges, mit dem Image verbundenen OCI-Layer verbunden werden.

Sind das Image und das Regelwerk hochgeladen, wird innerhalb der Registry die Instanziierung des Regelwerkes angestoßen. Hierbei werden dann für jede im Regelwerk definierte Datei in den jeweiligen Layern (Schichten) entsprechende Prüfsummen erzeugt und die spezifizierten Benutzer- und Gruppennamen auf die jeweiligen IDs innerhalb des Containers übersetzt.

Im nächsten Schritt wird auf mindestens einer Ausführungsumgebung eine Instanziierung des Container-Images durchgeführt. Hierzu kann ein Anwender das Image entweder direkt über die Kommandozeile instanziieren oder aber alternativ in einer nicht-orchestrierten Umgebung eine Docker-Compose-Datei oder bei einem Orchestrator wie Kubernetes ein Kubernetes Manifest übergeben.

Bei allen drei Varianten wird das Image referenziert und mit Hilfe entsprechender Parameter instanziiert. Bei der Instanziierung können der jeweiligen Instanz z.B. Prozess-Privilegien, Mount-Optionen für das Root-Filesystem oder persistente oder dynamisch erzeugte Dateisysteme des darunterliegenden Hostsystems eingerichtet werden.

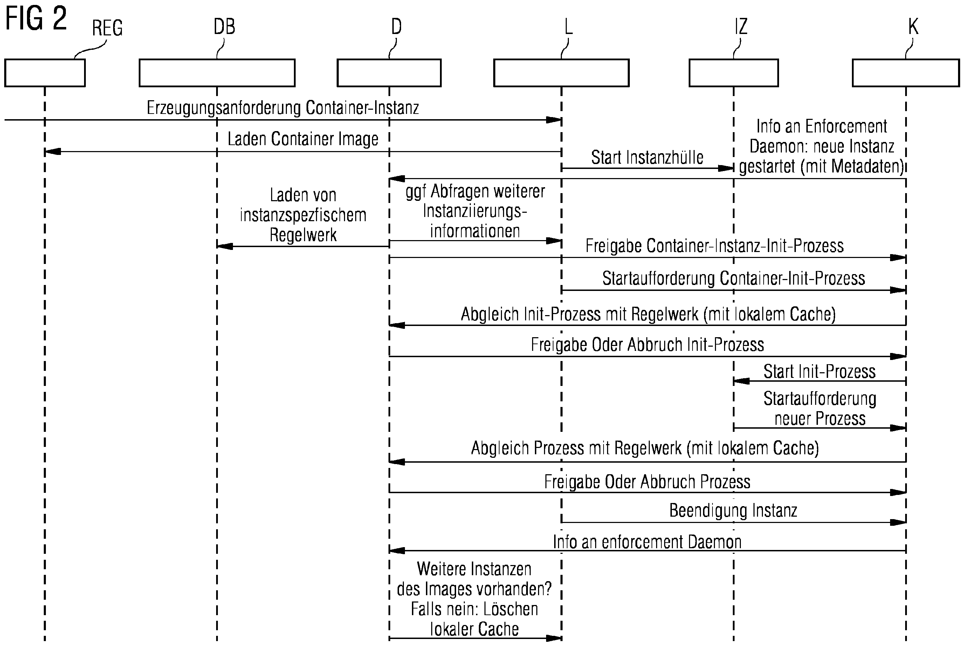

Ist bei einer Instanziierungsanforderung ein Image noch nicht im lokalen Cache-Speicher vorhanden oder gibt es eine entsprechende Image-Pull-Richtlinie (Policy), wird das Image von der hinterlegten Container-Registry geladen. Über den Pull-Request der Container-Laufzeitumgebung kann der Enforcement Daemon vom Kernel beispielsweise über fanotify oder entsprechend hinterlegte eBPF-Programme informiert werden. Der Ladevorgang des Images kann hierbei unterbrochen werden und zunächst das instanziierte Regelwerk in den lokalen Cache-Speicher des Enforcement-Daemons geladen werden. Alternativ - und wie in Figur 2 dargestellt - kann der Ladevorgang des Regewerkes von der Application Whitelisting Datenbank erst erfolgen, wenn die Instanz tatsächlich gestartet wird.

Die Figur 2 zeigt eine beispielhafte Ablaufbeschreibung beim Start einer neuen Container-Instanz. Wie in Figur 2 dargestellt - kann der Ladevorgang des Regewerkes von der Application Whitelisting Datenbank erst erfolgen, wenn die Instanz tatsächlich gestartet wird.

Dieses Verfahren hat den Vorteil, dass der Cache-Speicher nur dann befüllt wird, wenn die Instanz tatsächlich gestartet werden muss. Folglich muss der Cache-Speicher auch nicht zwingend auf der Ausführungsumgebung persistent gestaltet sein, sondern kann ausschließlich innerhalb des flüchtigen Speichers vorgehalten werden.

Weiterhin kann der Enforcement-Daemon vor oder während des Ladevorgangs des in der Registry bereitgestellten container-spezifischen Version des Regelwerkes umgebungsspezfisiche Instanziierungsinformationen der Container-Instanz von der Laufzeitumgebung abgefragt werden. Hierbei werden z.B. zugewiesene Namespaces, Mounts oder Prozess-Privilegien ermittelt. Sofern ein komplexes Regelwerk enthalten ist, können einzelne Regeln, die nichtzutreffend für die jeweilige Instanz können entsprechende von der Application Whitelisting zur Verfügung gestellte Regeln aus dem Cache-Speicher gelöscht werden. Allerdings muss in diesem Fall berücksichtigt werden, dass in diesem Fall die im Cache-Speicher zu speichernde Application-Whitelisting-Information instanzspezifisch und nicht Image-spezifisch hinterlegt werden kann. Beide Verfahren können hierbei auch in Kombination angewandt werden, sodass das Abbilden der Instanzspezfischen Einstellungen im Enforcement-Daemon beispielsweise erst zur Laufzeit erfolgt, solange eine Regelanzahl nicht überschritten ist oder aber die Anzahl der Instanzen gleichen Typs mit unterschiedlicher Instanziierung eine bestimmte Anzahl nicht überschreitet.

Aufgabe des Enforcement-Daemons ist es hierbei, dass dieser auf der darunterliegenden Laufzeitumgebung die instanzspezifischen Regeln durchsetzt und die containerisierten Prozesse z.B. durch Verbinden in die jeweiligen Betriebssystem-Namespaces übersetzt oder sonstige geeignete Umsetzungsmaßnahmen durchführt, die es dem Enforcement-Damon ermöglichen, dass dieser die Prozesse auch auf der Ausführungsumgebung selbst validieren kann. Hierzu werden auch die entsprechend beim Upload des Images generierten Dateihashes innerhalb des Regelwerkes verwendet, da hierüber die Authentizität und Integrität des Programmes innerhalb der Instanz validiert wird.

Sind sämtliche Informationen innerhalb des Enforcement Daemons enthalten und verstößt der sogenannte Container-Init-Prozess nicht gegen eine Regel im Regelwerk, erfolgt die Freigabe des Container-Prozesses.

Werden während der Laufzeit einer Container-Instanz weitere Prozesse gestartet, erfolgt die Überwachung analog wie oben beim Init-Prozess beschrieben. Dem Regelwerk widersprechender Prozess-Aufrufe werden hierbei ebenfalls unterbunden. Konforme Prozesse werden freigegeben und laufen gelassen.

Wird die Instanz von der Laufzeitumgebung gestoppt, wird der Container-Init-Prozess beendet und die Instanz-Meta-Information gelöscht. Über die Beendigung des Container-Init-Prozesses wird der enforcement-Daemon durch den Kernel (z.B. durch entsprechende eBPF-Programme) informiert.

Dieser bereinigt dann den lokalen Cache-Speicher und löscht die instanzspezifischen Informationen. Image-spezifische Whitelisting-Regelwerke können weiterhin vorgehalten werden und z.B. erst nach Ablauf eines Timeouts nach Beendigung der letzten Instanz oder sonstiger üblicher Speicherverdrängungstrategien gemäß Auslastung des Cachespeichers mit Hilfe einer Richtlinie innerhalb des Enforcement-Daemons verdrängt werden.

Welche Registries oder Images validiert werden müssen, kann ebenfalls im Enforcement-Daemon definiert werden. Hierbei können auch einzelne Registries oder auf einer Image-Registry betriebene Pfade innerhalb einer Konfigurationsrichtlinie ausgenommen werden. Alternativ kann innerhalb der Container-Laufzeitumgebung definiert werden, dass (Container-)Images bestimmte Signaturen aufweisen müssen. Hierbei besteht die Annahme, dass der Ersteller einer Signatur bestimmte Eigenschaften erfüllt und somit z.B. das Aufweisen einer bestimmten Signatur immer die Bereitstellung eines Application-Whitelisting-Regelwerkes mit sich bringt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor, der Teil der (Steuerungs-/Rechen-)-vorrichtung bzw. -einheit sein kann, mindestens einen Verfahrensschritt des Verfahrens ausführt. Das Verfahren kann hierbei auch in einer Rechnerwolke (Cloud) implementiert sein, die das Verfahren ausführen kann und damit Ergebnisse des Verfahrens an eine Steuerungs-/Rechen-)-vorrichtung bzw. - einheit liefern kann, die entsprechende Befehle bzw. Maßnahmen an die Vorrichtungen insbesondere der oben genannten Anordnung richten kann.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein.

## Patentansprüche

1. Computer-implementiertes Verfahren zum Bereitstellen eines Regelwerks zur Ausführungs- und/oder Ressourcenzugriffsbeschränkung für zumindest eine aus einem Container-Image (IM) gebildeten Container-Instanz (IZ), aufweisend folgende Schritte:
- vor dem Laden des Container-Images erstellen des Regelwerks (REP) und instanziieren einer containerimagespezifischen Version des Regelwerks und ablegen der containerimagespezifischen Version in einer Regeldatenbank (DB),
- beim Laden des Container-Images durch eine Container-Laufzeitumgebung (L) laden der containerimagespezifischen Version des Regelwerks in einen lokalen Speicher (Ch) einer Ausführungsumgebung zur Ausführung der Container-Instanz, die aus dem Container-Image durch die Container-Laufzeitumgebung gebildet wird,
- vor dem Ausführen der Container-Instanz ermitteln von durch die Container-Laufzeitzeitumgebung der auszuführenden Container-Instanz zugewiesenen Privilegien und zugewiesenen Ressourcen der Ausführungsumgebung (A) mittels eines auf der Ausführungsumgebung betriebenen Überwachungsdienstes (D),
- Überwachen von zur Ausführung der Container-Instanz notwendigen Prozessen während der Ausführung der Container-Instanz mittels der ermittelten Privilegien und Ressourcen sowie anhand der geladenen containerimagespezifischen Version des Regelwerks,
- und bei negativem Ergebnis des Überwachens Einleiten einer der Ausführung der genannten Prozesse entgegenwirkenden Maßnahme.

2. Verfahren nach dem vorhergehenden Anspruch, **dadurch gekennzeichnet, dass** die Instanziierung der containerspezifischen Version des Regelwerks innerhalb eines Container-Registers durchgeführt wird.

3. Verfahren nach einem der vorhergehenden Ansprüche, **dadurch gekennzeichnet, dass** die instanziierte containerimagespezifische Version des Regelwerks in einem von der Container-Laufzeitumgebung zugreifbaren Repository bereitgestellt wird für das Überwachen der Ausführung der Container-Instanz.

4. Verfahren nach einem der vorhergehenden Ansprüche, **dadurch gekennzeichnet, dass** bei der Instanziierung der containerspezifischen Version des Regelwerks für Binärdateien des Container-image jeweils Prüfsummen erstellt werden.

5. Verfahren nach einem der vorhergehenden Ansprüche, **dadurch gekennzeichnet, dass** nach Einleiten einer solchen Maßnahme und/oder Beenden der Ausführung der Container-Instanz die containerimagespezifische Version des Regelwerks aus dem lokalen Speicher gelöscht wird.

6. Verfahren nach einem der vorhergehenden Ansprüche, **dadurch gekennzeichnet, dass** die containerimagespezifische Version des Regelwerks bestimmte Eigenschaften von für das Container-Image erforderliche Signaturen und/oder Namespaces, das Einhängen von Laufwerken- und/oder Dateien der Ausführungsumgebung und/oder Prozess-Privilegien umfasst.

7. System zum Bereitstellen eines Regelwerks zur Ausführungs- und/oder Ressourcenzugriffsbeschränkung für zumindest eine aus einem Container-Image (IM) gebildeten Container-Instanz (IZ), aufweisend:
- eine Schnittstelle zu einem Container-Registers (REG), das vor dem Laden des Container-Images das Regelwerks (REP) erstellt, eine containerimagespezifische Version des Regelwerks instanziiert und diese in einer Regeldatenbank (DB) ablegt,
- eine Container-Laufzeitumgebung (L), welche dazu ausgelegt ist, beim Laden des Container-Images die containerimagespezifische Version des Regelwerks in einen lokalen Speicher (Ch) des Systems zur Ausführung der Container-Instanz zu laden, welche aus dem Container-Image durch die Container-Laufzeitumgebung gebildet wird,
- eine Überwachungseinheit zum Betreiben eines Überwachungsdienstes (D) auf einer Ausführungsumgebung (A) des Systems, welcher dazu ausgebildet ist, von durch die Container-Laufzeitzeitumgebung der auszuführenden Container-Instanz zugewiesenen Privilegien und zugewiesenen Ressourcen der Ausführungsumgebung vor dem Ausführen der Container-Instanz zu ermitteln und
- zur Ausführung der Container-Instanz notwendige Prozesse während der Ausführung der Container-Instanz mittels der ermittelten Privilegien und Ressourcen sowie anhand der geladenen containerimagespezifischen Version des Regelwerks zu überwachen und
- bei negativem Ergebnis des Überwachens eine der Ausführung der genannten Prozesse entgegenwirkenden Maßnahme einzuleiten.

8. Computerprogrammprodukt umfassend ein nichtflüchtiges Speichermedium, auf dem ein ladbarer und ausführbarer Programmkode oder verteilt ladbare und ausführbare Programmkodemodule speicherbar oder gespeichert sind, welches oder welche das Verfahren nach einem der vorhergehenden Verfahrensansprüchen in einer programmgesteuerten Recheneinrichtung oder in einem System nach den vorhergehenden Systemansprüchen ausführt.
